Europäisches Patentamt

European Patent Office

Office européen des brevets

(19)

(11) **EP 1 024 626 A1**

(12) **EUROPEAN PATENT APPLICATION**

(43) Date of publication:
**02.08.2000 Bulletin 2000/31**

(51) Int Cl.⁷: **H04L 9/08**, H04L 29/06

(21) Application number: **99101457.2**

(22) Date of filing: **27.01.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **International Business Machines Corporation**
**Armonk, NY 10504 (US)**

(72) Inventors:
• **Hermann, Reto**
  **8863 Buttikon (CH)**

• **Huseman, Dirk**
  **8134 Adliswil (CH)**

(74) Representative: **Heusch, Christian et al**
**International Business Machines Corporation,**
**Säumerstrasse 4**
**8803 Rüschlikon (CH)**

Remarks:
Amended claims in accordance with Rule 86 (2) EPC.

(54) **Method, apparatus, and communication system for exchange of information in pervasive environments**

(57)    The present invention provides a method, an apparatus, and a communication system for the exchange of information in a networked pervasive environment. Therewith an authenticated and secure session can be achieved. Therefor are used a first device and at least a remote second device. A unidirectional wireless communication channel between the first device and the remote second device is initiated, whereby a sequence via the unidirectional wireless communication channel from the first device to the remote second device is sent in order to furnish the remote second device with encryption information. An encrypted response is sent via a wireless broadcast medium to the first device by using said encryption information for encryption.

## Fig. 1

## Description

### TECHNICAL FIELD

The present invention is related to a method, an apparatus, and a communication system for the exchange of information in a networked pervasive environment. More particularly, the invention relates to an initial-scheme which allows devices participating in an authenticated and/or secure session.

### BACKGROUND OF THE INVENTION

Computer were large, rare, and isolated devices that have become dramatically smaller and more portable. Personal computers and peripherals are small enough to sit on the desk at work. Smaller still are lap top computers and notebook computers. There are computer terminals which are small enough to be mounted in a vehicle such as a delivery truck. Still smaller are the hand-held terminals typically used for their portability features where the user can carry the terminal in one hand and operate it with the other. A physical connection of the above devices by means of cables or fibers might have drawbacks, such as configuration constraints because of the limited length of the cable, limited number of ports on the computer thus limiting the number of peripherals that can be attached, cumbersome reconfiguration of hardwired devices, etc. Note that there are some peripheral interface systems where the limited number of ports on the computer does not really limit the number of peripherals. Universal Serial Bus (USB) and IEEE 1394 (Firewire) are examples of peripheral bus systems capable of supporting a large number of devices on a single port. Ethernet is one example of a communication system where the cable is used as a shared medium (other examples are token ring, FDDI (Fiber Distributed Data Interface), and DQDB (Distributed Queue Dual Bus)).

The smaller the devices get, the more important it becomes to replace fixed physical connections by wireless ad-hoc connections (e.g. body networks, radio-frequency connections, or infrared connections), since physically connecting the computer terminals, peripherals, and other devices by means of cables or fibers severely reduces the efficiency gained by making the units smaller. Ad-hoc connections are required where devices move around, enter an area and exit the area. The term ad-hoc refers to the need for frequent network reorganization.

Local area communication is rapidly evolving into what can be called personal local area networks, which are networks for communication between local peers or subsystems. These kind of networks will herein be referred to as local networks. Wireless communication is of particular importance in such local networks. There are different wireless communications approaches known that have been developed and designed with an eye on the communication between peers or subsystems of such local networks.

A typical example of a local network is the personal area network (PAN) which grew out of work between two research groups at the Massachusetts Institute of Technology's (MIT) Media Laboratory. The natural salinity of the human body makes it an excellent conductor of electrical current. The PAN technology takes advantage of this conductivity. The PAN technology uses a tiny electrical current to transmit a user's identification and other information from one person to another, or even to a variety of everyday objects such as cars, public telephones, and automated teller machines (ATMs). Information is transferred via microprocessors that are placed in PAN transmitters and receivers the size of a thick credit card. The digital data is then sent or received via a tiny external electric field. The small signal is conducted by the body's natural salinity and carries the information, unnoticed, through the body. The low frequency and power of the signal ensures that the information, which is coded to the individual, does not travel beyond the body and can only be received by something, or someone, in contact with it. The speed at which the information is currently transmitted is equivalent to a 2400-baud modem. Theoretically, 400,000 bits per second could be communicated using this method. The PAN is a typical example of an ad-hoc-body network which does not require any fixed cabling or the like.

The PAN technology has potential applications in business, medical, retail, and even in personal arenas. Business associates could, for example, exchange electronic business cards with a handshake. Corporate security devices could automatically log users on and off computer systems and subway commuters could pay for a ride by walking through a turnstile. PAN technology could also enable people to carry digital versions of their medical files for instant access by emergency medical technicians; calling card numbers could automatically be sent from a wallet to a payphone; and ATMs and automobiles would be able to immediately distinguish their owners as they approach. Another application area is with traders, requiring fast and reliable log on/off on the trading floor for entering purchases and sales. Even household devices, such as CD players, televisions and toasters, could identify and adapt to individual preferences and tastes using PAN technology. The PAN networks are usually point-to-point where the human body serves as kind of a broadcast communications medium.

GTE Corporation has developed a short-range radio-frequency (RF) technique which is aimed at giving mobile devices such as cellular phones, pagers, and handheld personal computers (PCs) a smart way to interact with one another. GTE's technique is tentatively named Body LAN (local area network). The original development of Body LAN was via a wired vest with which various devices were connected (hence the name Body LAN). This graduated to a RF connection a couple of years ago.

Xerox Corporation has developed a handheld computing device called PARC TAB. The PARC TAB is portable yet connected to the office workstation through base stations which have known locations. The PARC TAB base stations are placed around the building, and wired into a fixed wired network. The PARC TAB system uses a preset knowledge of the building layout and the identifiers of the various base stations to decide where it is by the strongest base station signal. A PARC TAB portable device has a wireless interface to the base stations. The PARC TAB system assumes that the PARC TAB portable device is always connected to the network infrastructure. The location of each portable PARC TAB device is always known to the system software.

The base stations establish regions and are connected to power supplies. PARC TAB communication systems have a star topology.

In an attempt to standardize data communication between disparate PC devices several companies, including Ericsson, IBM, Intel, Nokia, and Toshiba established the Bluetooth consortium to create a global standard for wireless RF-based connectivity between fixed, portable and mobile devices. There are many other adopter companies. The proposed standard comprises an architecture and protocol specifications ranging from the physical layer up to the application layer. The technology will for instance enable solutions to automatically synchronize application information kept in mobile devices with the similar information kept in a fixed desktop computer when users enter their offices. Enabling seamless voice and data transmission via wireless, short-range radio, the Bluetooth technology will allow users to connect a wide range of devices easily and quickly, without the need for cables, expanding communications capabilities for mobile computers, mobile phones and other mobile devices. The Bluetooth operating environment is not yet fully defined, but there are expected to be similarities with the IrDA (Infrared Data Association) specification and the Advanced Infrared (AIr) specification. Other aspects that probably will find their way into Bluetooth might stem from the IEEE standard 802.11 and/or HIPERLAN, as promulgated by the European Telecommunications Standards Institute (ETSI).

Bluetooth radio technology provides a mechanism to form small private ad-hoc groupings of connected devices away from fixed network infrastructures. Bluetooth makes a distinction between a master unit - which is a device whose clock and hopping sequence are used to synchronize all other devices - and slave units in the same network segment. In other words, the Bluetooth approach is centralized. A query-based discovery scheme is used for finding Bluetooth devices with an unknown address. Queries are also centralized at a registry server. It is a drawback of such a centralized approach that there is a central point of failure. It is another disadvantage of such a system that more overhead is required than in a distributed scheme. The main problem of such a system is in locating a single registry server, and what to do if it disappears. If a random two devices encounter each other they must first recognize each other's presence, then decide which is the registry server, and then go about their business of communicating. It is this continual selection and re-selection of a leader that causes the increased overhead. The alternative is to expect users to carry one device that they always have with them, and make it always the leader. This, however, is not always a practical option.

The Infrared Data Association (IrDA) is an association of over 150 companies world wide focused on providing infrared standards and specifications to ensure the quality and interoperability of the infrared technology. IrDA-D is the infrared data transmission standard designed for data transfer over a distance of 1 m, scaleable from 115 kb/s to 4Mb/s or 16 Mb/s in the near future. There is a wide range of supported hardware and software platforms. IrDA Data defines a standard for an interoperable universal two way cordless infrared light transmission data port and is recommended for high speed short range, line-of-sight, point-to-point cordless data transfer. IrDA Data Protocols consist of a set of mandatory protocols and optional protocols. However, the original specifications show some drawbacks and restrict the data communication such that only one pair of devices could communicate in the same infrared space at one time. In a collaboration between the companies Hewlett-Packard and IBM a further specification, called the Advanced Infrared (AIr), has been developed which will define the next generation of infrared data communication systems. Air is proposed for in room multipoint to multipoint connectivity. The distance and data rate are variable ranging from 250 kb/s over 8 m to 4 Mb/s over 4 m. It is designed for cordless connections to multiple peripherals and meeting room collaboration applications. More details about IrDA can be found at the IrDA web site http://www.irda.org.

HomeRF (based on Shared Wireless Access Protocol (SWAP) is another example of an operating environment which can be used to connect devices. A HomeRF Working Group was formed to provide the foundation for a broad range of interoperable consumer devices by establishing an open industry specification for wireless digital communication between PCs and consumer electronic devices anywhere in and around the home. The working group, which includes the leading companies from the personal computer, consumer electronics, peripherals, communications, software, and semiconductor industries, is developing a specification for wireless communications in the home called the SWAP. The HomeRF SWAP system is designed to carry both voice and data traffic and to interoperate with the Public Switched Telephone Network (PSTN) and the Internet; it operates in the 2400 MHz band and uses a digital frequency hopping spread spectrum radio. The SWAP technology was derived from extensions of existing cordless telephone (DECT) and wireless LAN technology to enable a new class of home cordless services. It supports both a time division multiple access (TDMA) service to provide delivery of interactive voice and other time-critical services, and a carrier sense multiple access/collision avoidance (CDMA/CA) service for delivery of high-speed-packet data. The SWAP system can operate either as an ad-hoc network or as a managed network under the control of a connection point. In an ad-hoc network, where only data communication is supported, all stations are equal and control of the network is distributed between stations. For time critical communications such as interactive voice, the connection point - which provides the gateway to the PSTN - is required to coordinate the system. Stations use the CSMA/CA to communicate with a connection point and other stations. Further details about HomeRF can be found at the Home Radio Frequency Working Group's web site http://www.homerf.org. The SWAP specification 1.0 is incorporated by reference in its entirety.

Transmitted information are restricted to an intended receiver and not suitable for everyone. For assuring secure and authenticated communications cryptographic methods are help- and useful. A cryptographic system is a system for sending a message from a sender to a receiver over a medium so that the message is 'secure'. That means, only the intended receiver can recover the message. The cryptographic system converts the message, also referred to as plaintext, into an encrypted format, known as ciphertext. The encryption is accomplished by manipulating or transforming the message using a cipher key or keys. The receiver decrypts the message by converting the ciphertext back to plaintext. This is performed by reversing the manipulation or transformation process using the cipher key or keys. Such an encrypted transmission is secure, so long as only the sender and the receiver have knowledge of the cipher key. Several cryptographic systems have been proposed in the past such as public-key cryptosystems. In a public-key cryptosystem, a private key is always linked mathematically to a public key. Known and used public-key cryptosystems, for example, are the Diffie-Hellman key agreement, the RSA scheme, or the ElGamal scheme. A non-malleable public-key cryptosystem that is provably secure against adaptive chosen chipertext attack is proposed by R. Cramer and V. Shoup.

It is an object of the present invention to provide a scheme for the exchange of information between devices in a networked pervasive environment.

It is another object of the present invention to provide a scheme for identifying communication peers.

It is yet another object of the present invention to present a scheme for establishing an authenticated communication session between at least two devices.

It is a further object of the present invention to provide a scheme for a secure communication session between at least two devices to ensure privacy.

SUMMARY AND ADVANTAGES OF THE INVENTION

The present invention relates generally to local networks and, more specifically, to the set up of an authenticated and/or secure communication session. An initial-scheme is proposed that allows locally distributed devices to establish a session and therewith the exchange of information. Such a session is used for the purpose of data communication between functional units or devices and with the word session are meant all activities which take place during the establishment, maintenance, and release of a connection. According to the invention at least two devices participate on a session in a networked pervasive computing environment.

The basic idea is that a user who wants to establish an authenticated session, that means authorized by the user, between a first device which is a personal device, e.g., a personal assistant, that the user is wearing and a second device, such as a serving device, in the user's proximity uses a directed, low-range communication link to initiate the communication session. Therefor the first device transmits encryption information and/or communication parameters to the target device. The target device, i.e. the second device, in turn uses the received information and parameters to establish a wireless broadcast connection to the originating device, i.e. the first device. A further part of the invention is the implementation of a key for guaranteeing a secure session and the controlling of the time-frame during which the communication between the personal and the serving device can take place.

For establishing an authenticated session between the user's personal device and the serving device, e.g. a bank terminal, the user points with the personal device to the serving device or at least in this direction and passes via a unidirectional wireless communication channel, e.g. via an infrared channel, a sequence or an initial-sequence that comprises a password, a public key, a session key, identification parameters, and/or communication parameters. After receiving the sequence, the serving device responds by sending back over a wireless broadcast medium encrypted information which can only be decrypted and used by the personal device. The respond may comprise information, a key, also a session key, and communication parameters from the serving device for further communication over the wireless broadcast medium. The personal device receives the encrypted information.

For a secure session over the wireless broadcast medium keys are exchanged. Thus, an encrypted communication over the wireless broadcast medium can take place.

It does not matter which device sends the communication parameters or the session key.

The requirement of arranging the personal device in the direction of the serving device nevertheless allows for a very intuitive way of selecting a communication partner. People are accustomed to pointing to things from their childhood on. Additionally, pointing has the advantage of explicitly selecting a communication target; e.g. with PAN links the user has to actually touch the communication target; with laser links a communication partner can be selected visually.

If the two devices share the same wireless broadcast medium and are part of a local network then the advantage occurs, that an initiated session can be continued even if the user with the personal device changes his location by walking to other rooms or floors. This will be helpful if the personal device downloads larger files or communicates with the serving device for a longer period of time. As wireless broadcast medium can be used an infrared (IR) channel or a radio-frequency (RF) channel, in particular an IrDA channel, a HomeRF channel, a Bluetooth channel, a Personal Area Network (PAN) channel, an acoustic channel, or any other channel that guarantees the user a wide range of action.

For initiating the communication session and for transmitting an initial-sequence that may contain sensitive information, the unidirectional wireless communication channel can ensure that only the target device receives the initial-sequence. It is especially advantageous if a directed channel as line-of-sight link can be used, because than no other parties can eavesdrop and receive the initial-sequence. Such a channel can be an optical channel, e.g. an infrared or a laser channel, a Personal Area Network (PAN) channel, a directed radio-frequency (RF) channel, an inductive channel, a capacitive channel, or every other channel that is suitable for low-range, directed communication links.

If the serving device signalizes the reception of the sequence from the personal device, then the advantage occurs, that the user gets a feedback and knows that the serving device is ready for further communication. This can be indicated by an optical and/or acoustical signal that is given by a lamp, a LED, or a loudspeaker.

When the serving device listens periodically for the sequence from the personal device, then the advantage shows up that a sent sequence can be processed immediately.

It is very simple to set up a communication if the personal device is connected to a user, e.g. by a PAN, because the user touches then in an intuitive way the serving device for initiating the unidirectional wireless communication channel via his body. There are no additional cards or other things necessary for setting up an authenticated session .

If the response as well as the further communication over the wireless broadcast medium is protected by using a cryptosystem, than the advantage occurs, that the exchanged information is hidden perfectly and can not be uncovered by someone else. A suitable system can be a public-key cryptosystem where only the public key is exchanged once.

It is a further advantage of the invention that - in the case of a wireless unidirectional link - no direct contact between the personal and the serving device is necessary. For instance cash-cards, smart-cards, or any other card in the personal device or the personal device itself can be loaded or uploaded with information, e.g. e-mails, data, or amounts of money from a relative distance. Cards do not need to be put in devices or read devices which avoids read errors, makes PIN codes superfluously, and helps to save time.

A secure session starts right close to or in front of a serving device and can be carried on in a secure way at a larger distance. Serving devices can be installed everywhere these devices are useful, for instance: in banks, offices, warehouses, shopping centers, and outside of buildings, just to mention some examples. This brings the user more independence and freedom of action. For instance the serving device can be placed right near an advertisement for a concert. A ticket for this concert can be bought and paid already at the platform of a train station where the user is waiting and sees the advertisement for the concert. The ticket can be electronically stored on a card or the personal device and can be uploaded at the entrance of the concert. The user does not have to wait in a queue at a ticket office and will not forget to buy the ticket.

DESCRIPTION OF THE DRAWINGS

The invention is described in detail below with reference to the following schematic drawings.

FIG. 1    shows a schematic illustration of an application according to the present invention where a user wants to establish an authenticated session between his personal device and a remote serving device.

FIG. 2    shows a more detailed schematic illustration of Fig. 1.

All the figures are for the sake of clarity not shown in real dimensions, nor are the relations between the dimensions shown in a realistic scale.

DETAILED DESCRIPTION OF THE INVENTION

For the purpose of the present description the term networked pervasive computing environment is defined as an environment of both portable and fixed information devices that communicate through wireless networking technology. Communication between devices within such an environment is proximity based The startup-communication range of these devices is small. Thus, only when devices are in proximity can a session be initiated. Furthermore, establishment of communication relationships is of an ad-hoc nature. That means communication on the physical layer can take place whenever any two devices are in proximity. A user of such device has a need to control the flow of information; in particular so where sensitive information, such as credit card details, authorizations, and so forth, are involved. A manifold problem is session control for which a mechanism is described.

In the context of this invention, a local network is defined as being a network composed of at least two devices within mutual communication range of each other. Within such a local network the devices communicate with each other without the need for a wired network. A local network does not need to have an access point for connection to a fixed network. The local network may be completely isolated from any other network, or it might comprise one or more access points which provide the (wireless) devices with access to the wired network.

The specific range that constitutes a local network in accordance with the present invention depends on actual implementation details. Generally, a local network can be described as having a coverage area between a few square meters and a few hundred square meters. Under certain circumstances the communication range might even go beyond.

The present networking scheme can be used in warehouses, on manufacturing floors, in offices, on trading floors, in private homes, in cars and trucks, in airplanes, and outside of buildings, just to mention some examples.

When referring to a device, any kind of device is meant that can be a member of a local network. Examples of devices are: laptop computers, workpads, nodepads, personal digital assistants (PDAs), notebook computers and other wearable computers, desktop computers, computer terminals, networked computers, internet terminals and other computing systems, set-top boxes, cash registers, bar code scanners, point of sales terminals, kiosk systems, cellular phones, pagers, wrist watches, digital watches, badges, smart cards, and other hand-held and embedded devices. Other devices considered include: headsets, Human Interface Device (HID) compliant peripherals, data and voice access points, cameras, printers, fax machines, keyboards, joysticks, kitchen appliances, tools, sensors such as smoke and/or fire detectors, and virtually any other digital device.

Other examples of wearable computers that can be used in connection with the present invention are, personal effects being equipped with computer-like hardware, such as a "smart wallet" computer, jewelry, or articles of clothing. In addition to a "smart wallet" computer, there are a number of other variations of the wearable computers. A "belt" computer is such a variation which allows the user to surf, dictate, and edit documents while they are moving around. Yet another example is a kids' computer which is comparable to a personal digital assistant for grade-school children. The kids' computer might hold assignments, perform calculations, and help kids manage their homework. It can interface with other kids' computers to facilitate collaboration, and it can access a teacher's computer to download assignments or feedback. Any wearable or portable device, any office tool or equipment, home tool or equipment, system for use in vehicles, or systems for use in the public (vending machines, ticketing machines, automated teller machines, etc.) might be used in the context of the present invention.

**Network topology:** The present scheme can be used in local networks with point-to-point and/or point-to-multi-point connections. Several network segments (groups) can be established and linked together ad-hoc. The network topology is lower-level than the subject of the present invention. Aspects of the network topology are only addressed to the extent necessary. Note that the present invention is independent of the network topology and can be used on any kind of network topology allowing broadcast.

**Network technology:** The present scheme can be used in connection with any kind of wireless communication technique, such as RF, IR, or other optical techniques, body networks (such as the PAN), and the like.

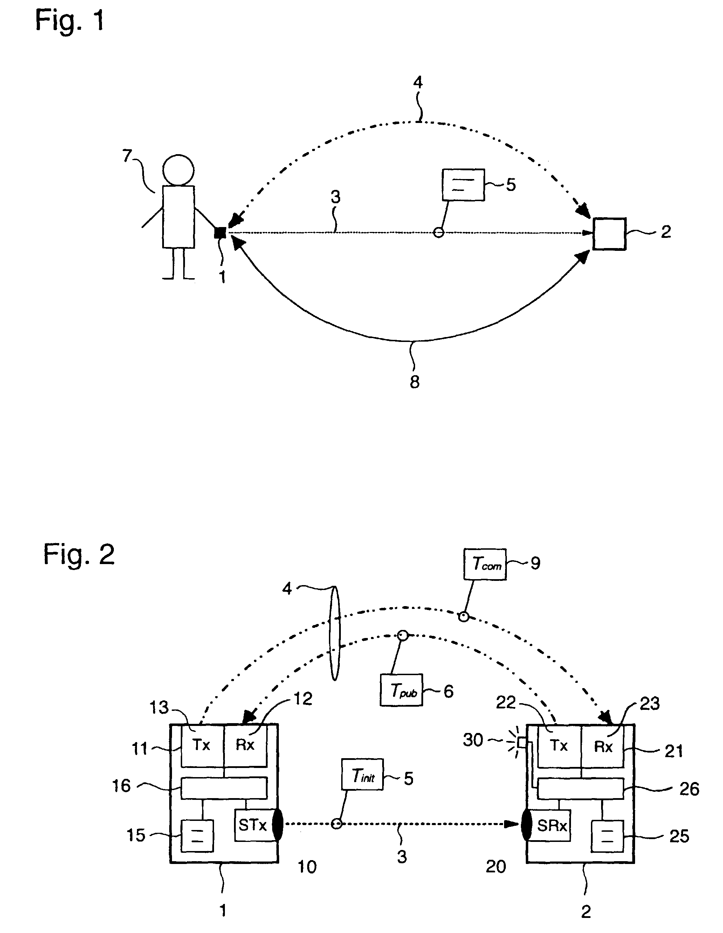

In the following an exemplary implementation (first embodiment) of the present scheme is described in connection which Figure 1 and 2.

In **Figure 1** a simple schematic illustration shows a user 7 who wants to setup an authenticated session 8 for the exchange of information between a first device 1 that is situated in the user's hand and a second device 2 that is in the user's proximity. For that the user 7 physically points with the first device 1 in the direction of the second device 2 in order to initiate a connection. The first device 1 sends a sequence 5 with encryption information via a unidirectional wireless communication channel 3 to the target device, the second device 2. It is advantageous if the unidirectional wireless communication channel 3 is established as a directed line-of-sight link, e.g. as an infrared channel, which guarantees for security, because nobody else can listen in the link. The second device 2, which can be a printer or even a device of a further person, receives the sequence 5 that contains a password, key, communication parameter, or identification parameter and uses the received information to setup the desired authenticated session 8 to the user's first device 1. A wireless broadcast medium 4 is used for that purpose.

**Figure 2** refers to Figure 1 and shows a more detailed arrangement. The first device 1 comprises an initial-transmitter 10, a first transceiver 11, a first cryptosystem 15. All these units are connected to a first processing unit 16 that again is connected to further units but for the sake of clarity, this is not depicted. The first transceiver 11 has a first broadcast-receiver 12 and a first broadcast-transmitter 13. The second device 2 on the other hand comprises an initial-receiver 20, a second transceiver 21, and a second cryptosystem 25. All units of the second device 2 are connected to a second processing unit 26 that again is connected to further units for data processing or even to a network but for the sake of clarity, this is not depicted. The second transceiver 21 has a second broadcast-transmitter 22 and a second broadcast-receiver 23. Further, the second device 2 shows a signal-device 30 which is here a LED. This LED 30 is connected to the central processing unit 26. The task of the two cryptosystems 15, 25 is to encrypt and decrypt information and therewith to cover and protect the exchanged information.

To provide authenticity the present scheme employs a public-key scheme. That means a first party creates a public key by using a private key and a cryptographic algorithm and sends this public key to a second party or makes the public key available for other parties. Then, for instance the second party can encrypt information by using the received public key. The encrypted information is sent back via an insecure medium or channel, e.g. a wireless broadcast medium such as a radio-frequency (RF) channel. However, only the first party is able to decrypt the information by using their private key.

The initial-scheme according to the present invention works as follows. The user 7, for the sake of clarity not shown in Figure 2, sends from the first device 1 by using the initial-transmitter 10 the sequence 5 that comprises here an initiating token $T_{init}$ via the unidirectional wireless communication channel 3, that is here a directed IR channel, to the second device 2. The initiating token $T_{init}$ contains a public key $K_{pub}^p$ of the first device 1 and a randomly chosen $nonce_p$. By transmitting the initiating token $T_{init}$ via the unidirectional wireless communication channel 3 only the intended second device 2 can receive and respond to it. If the second device 2 receives the sequence 5 at the initial-receiver 20 and the second processing unit 26 is informed and delivered with the sequence 5, then the LED 30 is triggered by the first central processing unit 16 and signalizes the user 7 that the second device 2 is ready and a communication session can start. The session is controlled by the user at all times, which further means that the user can stop the session immediately. Normally, the second device 2 responds to the received initiating token $T_{init}$ by sending from the second broadcast-transmitter 22 a public-key token $T_{pub}$ as response 6 back to the first device 1 using the wireless broadcast medium 4 that is here a radio-frequency (RF). The public-key token $T_{pub}$ that is created by the second cryptosystem 25 contains the concatenation of the public key $K_{pub}^S$ of the second device 2 and the received $nonce_p$; the public-key token $T_{pub}$ is encrypted using the public key $K_{pub}^p$ of the first device 1, that was received in the initiating token $T_{init}$. Finally, the first device 1 receives the response 6 by the first-main receiver 12, processes this response 6 by using the first processing unit 16 and the first cryptosystem 15, and sends a communication sequence 9 that comprises a communication-parameter token $T_{com}$ back by using the first broadcast-transmitter 13. This communication sequence 9 is also transmitted over the wireless broadcast medium 4 and is received by the second broadcast-receiver 23 of the second device 2. The communication-parameter token $T_{com}$ is encrypted with the received public key $K_{pub}^S$ of the second device 2.

The exchanged token can be mathematically expressed as follows.

$$T_{init} = K_{pub}^p \parallel nonce_p$$

$$T_{pub} = \left[ K_{pub}^S \parallel nonce_P \right]_{K_{pub}^p}$$

$$T_{com} = [Com]_{K_{pub}^S}$$

The first cryptosystem 15 provides the initiating token $T_{init}$ and the communication-parameter token $T_{com}$, whereas the second cryptosystem 25 provides the public-key token $T_{pub}$.

Subsequent communication between the first device 1 and second device 2 takes place over the wireless broadcast medium 4 by using the first transceiver 11 and the second transceiver 21. Thereby are used the communication parameters specified by the first device 1.

An authenticated session has been described in a first embodiment above. However, to exchange sensitive information, e.g. credit card information, authenticity alone is not sufficient. A secured, private communication link between the first device 1 and the second device 2 is required. Therefore a second embodiment is achieved by including in the communication-parameter token $T_{com}$ a cryptographic session key $K_{sess}^p$ generated by the first cryptosystem 15 of the first device 1. Each subsequent communication between both devices is encrypted by using this session key $K_{sess}^p$.

Another embodiment is addressed in relation to the first and second embodiment in the following. Typically interactions between the first device 1 that is a personal device and the second device 2 that is a serving device take place within a specific, timed context. In order to prevent the serving device 2 from being able to reuse the initiating token $T_{init}$ over and over again, a due-date $T_D^{init}$ is a attached to the initiating token $T_{init}$. Both are transmitted within the sequence 5. The personal device 1 responds to the public-key token $T_{pub}$ only if the due-date $T_D^{init}$ attached to the initiating token $T_{init}$ has not yet passed. Note that the due-date $T_D^{init}$ is relative to the personal device 1 notion of time.

Still another embodiment is a variation of the above described embodiments. Similar to the due-dated initiating token $T_D^{init}$, a due-date $T_D^{sess}$ is attached to the session key $K_{sess}^p$ generated by the personal or first device 1 and transmitted over the wireless broadcast medium 4. The implementation of the due-date $T_D^{sess}$ gives the responding device 2 a defined time-limit for the response. If the limit has passed, no transmission is required and the session is stopped. This may help to save power of portable devices and provide security.

Passing the sequence 5 with the initiating token $T_{init}$ via the wireless communications channel 3 to the serving devices 2 should be under the explicit control of the user 7. Depending on the technology used for the unidirectional wireless communication channel 3, this problem is addressed in different ways. Communication over the unidirectional wireless communication channel 3, hereinafter short unidirectional channel 3, is disabled by default. When the unidirectional channel 3 is a optical link of a laser pointer, the following two-phase procedure solves the problem: (1) the user 7 pushes a first button to activate the laser and aims the laser in the desired direction by visual control of the spot of the laser beam when it hits the surface of the aimed object; (2) when the user 7 decides that the laser beam is on target, he/she presses a second button to actually transmit the sequence 5 with the initiating token $T_{init}$ to the target device 2. When the unidirectional channel 3 is based on the PAN technology, the following two-phase procedure solves the problem: (1) the user 7 enables the unidirectional channel 3 by pressing a first button; once activated, the unidirectional channel 3 stays activated for some limited time $\delta T$ during which the user 7 has the opportunity to transmit the sequence 5 over the directed channel 3 by touching the PAN-enabled surface; (2) the user 7 touches the PAN-enabled surface to actually transmit the sequence 5 over the unidirectional channel. After $\delta T$ has expired, communication over the unidirectional channel 3 is immediately disabled, which prevents any further accidental information exchange.

An extension of the activation procedure is the case where the user can prolong $\delta T$ by pressing the first button of the personal device repeatedly.

In addition, the personal device should provide a similar means for disabling the universal wireless communication channel 3 immediately.

Any disclosed embodiment may be combined with one or several of the other embodiments shown and/or described. This is also possible for one or more features of the embodiments.

**Claims**

1. A method for providing an authenticated communication session of a first device (1) with at least a remote second device (2), comprising the steps of:

   • initiating a unidirectional wireless communication channel (3) between said first device (1) and said remote second device (2),

   • sending a sequence (5) via said unidirectional wireless communication channel (3) from said first device (1) to said remote second device (2) in order to furnish said remote second device (2) with encryption information, and

   • sending an encrypted response (6) via a wireless broadcast medium (4) to said first device (1), using said encryption information for encryption.

2. The method of claim 1, wherein said two devices (1, 2) share said wireless broadcast medium (4) and are part of a local network.

3. The method of claim 1, wherein said unidirectional wireless communication channel (3) is an optical channel, a Personal Area Network (PAN) channel, a directed radio-frequency channel, an inductive channel, or a capacitive channel.

4. The method of claim 1 or 3, wherein said unidirectional wireless communication channel (3) is a directed channel.

5. The method of claim 4, wherein said directed unidirectional wireless communication channel (3) is a line-of-sight link.

6. The method of claim 1, wherein an initial-transmitter (10) of said first device (1) is arranged such that said unidirectional wireless communication channel (3) is directed towards said second device (2).

7. The method of claim 1 or 2, wherein said wireless broadcast medium (4) is an optical channel, an acoustic channel, a radio-frequency (RF) channel, a HomeRF channel, a Bluetooth channel, or a Personal Area Network (PAN) channel.

8. The method of claim 1, wherein said unidirectional wireless communication channel (3) has a reach of a few meters and a channel of said wireless broadcast medium (4) has the same reach or a reach beyond the reach of said unidirectional wireless communication channel (3).

9. The method of claim 1, wherein only said remote second device (2) receives said sequence (5).

10. The method of claim 1, wherein said remote second device (2) signalizes the reception of said sequence (5) from said first device (1), preferably by an optical and/or acoustical signal.

11. The method of claim 1, wherein said remote second device (2) listens periodically for said sequence (5).

12. The method of claim 1, wherein said first device (1) is connected to a user (7), and wherein said user (7) touches said remote second device (2) for initiating said unidirectional wireless communication channel (3) via the user's body.

13. The method of claim 1, wherein one of said two devices (1, 2) sends at least a communication parameter and/or a session key.

14. The method of claim 1, wherein said response (6) over said wireless broadcast medium (5) is protected by using a cryptosystem, preferably a public-key cryptosystem.

15. The method of claim 1, wherein said encryption information comprises a password and/or a public key.

16. An apparatus for providing an authenticated communication session with at least one remote device (2), comprising

   • an initial-transmitter (10) for transmitting a sequence (5) via a unidirectional wireless communication channel (3) to said remote device (2),

   • a receiver (12) for receiving encrypted information from said remote device (2) via a wireless broadcast medium (4), and

   • a cryptographic system (15) providing encryption information which is transmitable over said unidirectional wireless communication (3) channel to said remote device (2) and whereby said receiver (12) is able to receive over said wireless broadcast medium (4) encrypted information which is processable by said cryptographic system (15).

17. An apparatus for providing an authenticated communication session with at least one device (1), comprising

   • an initial-receiver (20) for receiving a sequence (5) via a unidirectional wireless communication channel (3) from said device (1) in order to obtain encryption information,

   • a cryptographic system (25) for processing said encryption information, and

   • a transmitter (22) for transmitting encrypted information to said device (1) over a wireless broadcast medium (4).

18. A communication system for providing an authenticated communication session of a first device (1) with a second device (2), each having a cryptographic system (15, 25) for encoding and decoding of information, whereby

   • said first device (1) comprises an initial-transmitter (10) for sending a sequence (5) via a unidirectional wireless communication channel (3) to said second device (2) in order to furnish said second device (2) with encryption information, and a first transceiver (11) for encrypted communication between said first and second device (1, 2) over a wireless broadcast medium (4), and

   • said second device (2) comprises an initial-receiver (20) for receiving said sequence (5) from said first device (1) via said unidirectional wireless communication channel (3) in order to obtain said encryption information, and a second transceiver (21) for encrypted communication between said first and second device (1, 2) over said wireless broadcast medium (4).

19. The apparatus according to claim 16, further comprising a transmitter (13) which is able to transmit encrypted information over said wireless broadcast medium (4).

20. The apparatus according to claim 16, whereby said initial-transmitter (10) transmits said sequence (5) via said unidirectional wireless communication channel (3) in a reach of a few meters.

21. The apparatus according to claim 16 or 17, whereby said wireless broadcast medium (4) is an optical channel, an acoustic channel, a radio-frequency (RF) channel, a HomeRF channel, a Bluetooth channel, or a Personal Area Network (PAN) channel.

22. The apparatus according to claim 16 or 17, whereby said wireless broadcast medium (4) has the same reach or a reach beyond the reach of said unidirectional wireless communication channel (3).

23. The apparatus according to claim 17, further comprising a signal-device (30) for signalizing the reception of said sequence (5), preferably by an optical and/or acoustical device such as a LED and/or a loudspeaker.

24. The apparatus according to claim 17, whereby said initial-receiver (20) listens periodically for said sequence (5).

25. The communication system according to claim 18, whereby one of said two devices (1, 2) is able to send a communication parameter and/or a session key.

26. The communication system according to claim 18, whereby said two devices (1, 2) share said wireless broadcast medium (4) and are part of a local network.

27. The communication system according to claim 18, whereby said initial-transmitter (10) of said first device (1) is arrangable such that said unidirectional wireless communication channel (3) is directed towards said second device (2), preferably by a line-of-sight link.

Fig. 1

Fig. 2

EP 1 024 626 A1

European Patent Office

**EUROPEAN SEARCH REPORT**

Application Number

EP 99 10 1457

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | EP 0 756 397 A (HEWLETT PACKARD CO) 29 January 1997 | 1-9, 12-22, 25-27 | H04L9/08 H04L29/06 |
| A | * abstract * <br><br> * column 1, line 1 - column 6, line 43 * | 10,11, 23,24 | |
| Y | EP 0 843 425 A (IBM) 20 May 1998 | 1-9, 12-22, 25-27 | |
| A | * abstract * <br><br> * column 1, line 20 - column 3, line 36 * <br> * column 5, line 26 - column 9, line 49 * <br> * column 12, line 2-19 * | 10,11, 23,24 | |
| A | GB 2 254 225 A (NAT SEMICONDUCTOR CORP) 30 September 1992 <br> * abstract * <br> * page 2, line 31 - page 3, line 3 * <br> * page 4, line 6 - page 5, line 34 * <br> * page 9, line 13-34 * | 1-27 | |
| | | | TECHNICAL FIELDS SEARCHED (Int.Cl.6) |
| | | | H04L H04B |

The present search report has been drawn up for all claims

| Place of search | Date of completion of the search | Examiner |
|---|---|---|
| THE HAGUE | 9 June 1999 | Lievens, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**EP 1 024 626 A1**

**ANNEX TO THE EUROPEAN SEARCH REPORT**
**ON EUROPEAN PATENT APPLICATION NO.**  EP 99 10 1457

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-1999

| Patent document cited in search report | | Publication date | Patent family member(s) | | Publication date |
|---|---|---|---|---|---|
| EP 0756397 | A | 29-01-1997 | JP | 9167098 A | 24-06-1997 |
| | | | US | 5887063 A | 23-03-1999 |
| EP 0843425 | A | 20-05-1998 | US | 5796827 A | 18-08-1998 |
| | | | CN | 1185065 A | 17-06-1998 |
| | | | JP | 10228524 A | 25-08-1998 |
| GB 2254225 | A | 30-09-1992 | US | 5500888 A | 19-03-1996 |

EPO FORM P0459

For more details about this annex : see Official Journal of the European Patent Office, No. 12/82

13